# EUROPÄISCHE PATENTSCHRIFT

(11) **EP 3 972 879 B1**
(45) Veröffentlichungstag und Bekanntmachung des Hinweises auf die Patenterteilung: **12.07.2023**
(21) Anmeldenummer: 20730977.4
(22) Anmeldetag: 14.05.2020
(51) Int. Cl.: B60T 13/66, B60T 8/17, B60T 8/88, B60T 8/92, B60T 17/22, B60T 8/32, B60T 7/12, B60T 8/36, B61H 1/00

(54) **NOTBREMSVENTILSYSTEM FÜR EIN PNEUMATISCHES BREMSSYSTEM**
EMERGENCY BRAKE VALVE FOR A PNEUMATICAL BRAKE SYSTEM
VALVE DE FREIN D'URGENCE POUR UN SYSTÈME DE FREIN

(30) Priorität: 23.05.2019 DE 102019113753
(43) Veröffentlichungstag der Anmeldung: 30.03.2022
(73) Patentinhaber: KNORR-BREMSE Systeme für Schienenfahrzeuge GmbH, 80809 München (DE)
(72) Erfinder: LOUCA, Sebastian, 80799 München (DE); SCHMIDT, Maximilian, 80797 München (DE)
(86) Internationale Anmeldenummer: PCT/EP2020/063460
(87) Internationale Veröffentlichungsnummer: WO 2020/234109

(56) Entgegenhaltungen:
- EP-A2- 0 738 640
- DE-A1-102009 016 986
- DE-B3-102008 012 700

## Beschreibung

Die Erfindung betrifft ein Notbremsventilsystem für ein pneumatisches Bremssystem in einem Fahrzeug, insbesondere in einem Schienenfahrzeug. Anhand des Notbremsventilsystems ist es möglich in einer Notsituation den für die Bremsung notwendigen Bremsdruck durch Umschalten auf einen Alternativpfad sicher bereit zu stellen und anschließend wieder auf einen kontrollierbaren Bremsdruck zu wechseln.

In heutigen Bremssystemen von Schienenfahrzeugen wird im Fall einer Notbremsung von einem geregelten Druck auf einen statischen Druck umgeschaltet, um diesen als sicheren Bremsdruck in die Bremszylinder zu leiten und eine zügige und sichere Bremsung zu gewährleisten. Für diesen Zweck wird in der Regel ein Notbremsventilsystem, das üblicherweise mit einem Magnetventil ausgestattet ist, elektrisch geschaltet.

Der geregelte Druck, der im regulären Betrieb als Bremsdruck verwendet werden kann, kann, sofern keine Bremsung durchgeführt werden muss, kontrolliert und entlüftet werden. Er wird beispielsweise mit Hilfe einer elektronischen Druckregelung oder einem pneumatischen Steuerventil erzeugt.

Der statische Druck hingegen, der im Falle einer Notbremsung an die Bremszylinder geleitet wird, ist normalerweise auf dem notwendigen Bremsdruckniveau einer Notbremsung fixiert, um im Notfall einen sicheren Bremsdruck in der geeigneten Höhe zur Verfügung stellen zu können. Er kann daher normalerweise nicht entlüftet werden.

Um im Notfall vom geregelten Druck auf den statischen Druck umschalten zu können, wird üblicherweise ein oben bereits erwähntes Notbremsventilsystem verwendet. Dieses beinhaltet üblicherweise zur Steuerung des Systems ein Magnetventil, welches im Normalbetrieb bestromt ("low active") ist und in diesem Zustand über ein weiteres Kolbenventil einen geregelten Druck auf die Bremszylinder leitet. Im Falle einer Notbremsung wird die Stromversorgung zum Magnetventil unterbrochen, wodurch dieses in seine stromlose Ausgangsstellung schaltet, wobei das Magnetventil so konfiguriert ist, dass dabei der geregelte Druck isoliert wird und ein statischer Druck als Bremsdruck auf die Bremszylinder geleitet wird.

Um die Notbremsung wieder aufzuheben, muss das Magnetventil wieder mit Strom versorgt werden, so dass es seine stromlose Ausgangsstellung verlassen kann und wieder der geregelte Druck als Bremsdruck in die Bremszylinder geleitet werden kann. Ist in Notsituationen eine Bestromung des Magnetventils nicht möglich, liegt immer der statische Druck als Bremsdruck an den Bremszylindern an. Dieser kann jedoch nicht gesteuert oder gelöst bzw. entlüftet werden, um beispielsweise das Fahrzeug abzuschleppen. Es kann somit lediglich der statische Druck isoliert und entlüftet werden, wodurch allerdings kein Bremsdruck mehr an den Bremszylindern anliegt und somit keine kontrollierte Steuerung der Bremsung mehr möglich ist.

In diesem Zusammenhang offenbart beispielsweise auch die EP 0 738 640 A2 eine Druckluft-Bremsanlage für ein Nutzfahrzeug, die einen Vorderachsbremskreis und einen Hinterachsbremskreis und diesen je einzeln zugeordnete Druckluftbehälter sowie eine zur Einsteuerung der Fahrzeugverzögerung mittels eines Pedals betätigbare Bremsventilanordnung hat, die den beiden Bremskreisen je einzeln zugeordnete Druckausgänge aufweist. Dabei ist der zur Aktivierung der einen Vorderradbremse vorgesehene pneumatische Zylinder direkt an den Vorderachs-Druckausgang der Bremsventilanordnung angeschlossen, während der für die andere Vorderradbremse vorgesehene pneumatische Zylinder an diesen Druckausgang über eine elektrisch ansteuerbare Umschalt-Magnetventilanordnung angeschlossen ist, die im Falle eines Lecks im Vorderachsbremskreis aus einer dem intakten Zustand der Bremsanlage zugeordneten Grundstellung in eine einem Notbremsbetrieb zugeordnete Funktionsstellung gelangt, wenn das elektrische Ausgangssignal eines elektronischen Drucksensors, der den Druck im Druckluftbehälter des Vorderachs-Bremskreises überwacht, nur noch einem vorgegebenen Mindestwert entspricht. Im Notbetrieb ist der über die Magnetventilanordnung gegen den Vorderachs-Druckausgang der Bremsventilanordnung abgesperrte Radbremszylinder aus einem weiteren Druckluftbehälter des Fahrzeuges mit einem Druck beaufschlagbar, der durch den am Hinterachsdruckausgang der Bremsventilanordnung bereitstellbaren Druck steuerbar ist.

Die DE 10 2009 016 986 A1 betrifft ein Verfahren zur Steuerung der mittels einer Bremszange auf eine Bremsscheibe an einer Radachse eines Schienenfahrzeuges, insbesondere eines Hochgeschwindigkeitsschienenfahrzeuges, übertragenen Bremskraft, wobei die Steuerung in Abhängigkeit von der Fahrzeuggeschwindigkeit erfolgt.

Die DE 10 2008 012 700 B3 offenbart eine elektropneumatische Bremseinrichtung für ein Fahrzeug mit lastkorrigierter Bremsdruckregelung, bei welcher ein elektropneumatischer Bremsdruckregler einen dem Fahrzeuggewicht angepassten Vorsteuerdruck für ein nachgeschaltetes Relaisventil zur Beaufschlagung eines pneumatischen Bremszylinders liefert, mit welchem ein Vorsteuer-Druckspeicher befüllbar ist, wobei der Bremsdruckregler während des normalen Fahrbetriebes in einem zusätzlichen Notbrems-Druckspeicher einen lastkorrigierten Notbrems-Vorsteuerdruck ausregelt, welcher im Falle einer Notbremsung zum Vorsteuern des Relaisventils zum Einsatz kommt.

Es ist daher Aufgabe der Erfindung ein Notbremsventilsystem für ein pneumatisches Bremssystem bereitzustellen, welches es ermöglicht nach einer Notbremsung wieder einen geregelten Druck als Bremsdruck einzusetzen, wenn der statische Druck isoliert und entlüftet wurde.

Diese Aufgabe wird durch ein Notbremsventilsystem gemäß dem Hauptanspruch gelöst. Vorteilhafte Weiterbildungen der Erfindung sind in den Unteransprüchen enthalten.

Das erfindungsgemäße Notbremsventilsystem ist Teil einer Bremssteuerung eines Fahrzeugs und weist zwei Ventile auf. Das erste Ventil ist dazu konfiguriert einen Hilfsdruck an das zweite Ventil zu leiten oder den Hilfsdruck vom zweiten Ventil zu isolieren. Das zweite Ventil hingegen ist dazu konfiguriert in Abhängigkeit von dem Hilfsdruck entweder einen statischen oder einen geregelten Druck bereitzustellen. Weiterhin ist das erste Ventil dazu konfiguriert im regulären Betrieb den Hilfsdruck vom zweiten Ventil zu isolieren und dieses dadurch derart zu schalten, dass das zweite Ventil den geregelten Druck bereitstellt. Im Notbetrieb ist das erste Ventil hingegen dazu konfiguriert den Hilfsdruck auf das zweite Ventil zu leiten, so dass das zweite Ventil einen statischen Druck am Druckausgang bereitstellt. Bei einer Notbremsung steht somit der statische Druck als Bremsdruck zur Verfügung.

Das erfindungsgemäße Notbremsventilsystem erlaubt es nach einer Notbremsung durch den statischen Druck durch einfache Isolation und Entlüftung des Hilfsdrucks, beispielsweise durch ein mechanisches Ventil, den geregelten Druck wieder als Bremsdruck zur Verfügung zu stellen. Damit ist es möglich nach einer Notbremsung die Bremse ohne Betätigung des ersten Ventils zu lösen, das Fahrzeug abzuschleppen und einen einstellbaren Bremsdruck durch den geregelten Druck zur Verfügung zu stellen.

In einer vorteilhaften Ausführungsform der Erfindung ist der vom zweiten Ventil bereitgestellte Druck der Ausgangsdruck des Notbremsventilsystems.

Weiterhin vorteilhaft ist die Ausführungsform dann, wenn der vom zweiten Ventil bereit gestellte Ausgangsdruck des Notbremsventilsystems, der Bremsdruck ist, der an den Bremszylindern des pneumatischen Bremssystems anliegt.

In einer weiteren vorteilhaften Ausführungsform der Erfindung sind der erste Druckeingang und der zweite Druckeingang am zweiten Ventil vorgesehen. Ebenso ist in einer vorteilhaften Ausführungsform der Erfindung der Druckausgang am zweiten Ventil vorgesehen. Eine derartige Ausführungsform hat den Vorteil, dass durch die Stellung des zweiten Ventils direkt beeinflusst werden kann, ob der statische Druck oder der geregelte Druck am Druckausgang anliegen.

In einer weiteren vorteilhaften Ausführungsform der Erfindung ist der dritte Druckeingang am ersten Ventil vorgesehen.

In einer vorteilhaften Ausführungsform der Erfindung ist das erste Ventil ein Magnetventil. Die Aufgabe des ersten Ventils einen Hilfsdruck entweder passieren zu lassen oder zu sperren kann von einem Magnetventil besonders einfach und effektiv übernommen werden, da diese in Abhängigkeit der Bestromung geöffnet oder geschlossen werden können. Außerdem stellt ein Magnetventil eine einfache im Allgemeinen günstige und wartungsarme Ventilart dar.

Weiterhin vorteilhaft ist die Ausführungsform dann, wenn das Magnetventil dazu konfiguriert ist im regulären Betrieb bestromt zu sein und dabei den am Druckeingang anliegenden Druck auf das zweite Ventil zu leiten.

Ebenso vorteilhaft ist die Ausführungsform, wenn das Magnetventil dazu konfiguriert ist im Notbetrieb unbestromt zu sein und dabei den am Druckeingang anliegenden Druck vom zweiten Ventil zu isolieren.

In einer weiteren vorteilhaften Ausführungsform der Erfindung ist das zweite Ventil ein Kolbenventil, welches durch den vom ersten Ventil bereitgestellten Hilfsdruck gesteuert wird. Auch ein Kolbenventil stellt eine einfache, günstige und wartungsarme Ventilart dar.

In einer weiteren vorteilhaften Ausführungsform der Erfindung ist das erste Ventil dazu konfiguriert den im Notbetrieb am zweiten Ventil anstehenden Hilfsdruck (p_{hilf}) beim Übergang zurück in den regulären Betrieb zu entlüften. In einem Fall in dem das erste Ventil zunächst im regulären Betrieb ist, dann in den Notbetrieb fällt und anschließend wieder in den regulären Betrieb versetzt wird, kann somit der am zweiten Ventil anstehende Hilfsdruck entlüftet werden und ein regulärer Betrieb ohne weiteren Eingriff fortgeführt werden. Ein derartiger Fall könnte beispielsweise auftreten, wenn das erste Ventil ein elektrisch betriebenes Magnetventil ist, wobei ein vorübergehender Ausfall der Stromversorgung am Magnet zu einem Notbetrieb und dann wieder zu einem regulären Betrieb führt.

Im Folgenden wird die Erfindung anhand der beigefügten Figuren näher erläutert. Die Figuren zeigen im Einzelnen:
- **Figur 1**: zeigt ein Notbremsventilsystem gemäß dem Stand der Technik
- **Figur 2**: zeigt eine Tabelle zur Veranschaulichung der Bereitstellung des Ausgangsdrucks nach dem Stand der Technik
- **Figur 3**: zeigt ein erfindungsgemäßes Notbremsventilsystem
- **Figur 4**: zeigt eine Tabelle zur Veranschaulichung der Bereitstellung des Ausgangsdrucks mit einem erfindungsgemäßen Notbremsventil
- **Figur 5**: zeigt einen Teil einer Systemarchitektur in die das Notbremsventilsystem integriert ist.

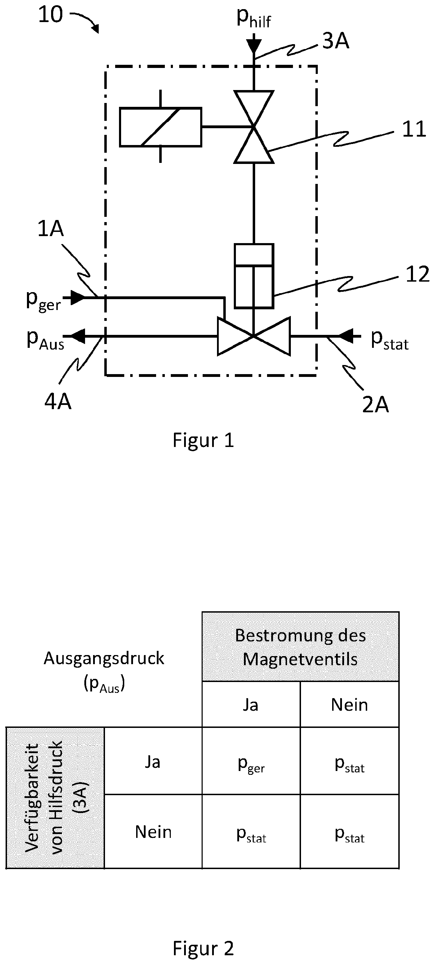

**Figur 1** zeigt ein Notbremsventilsystem 10 gemäß dem Stand der Technik. Es zeigt einen Druckausgang 4A und drei Druckeingänge 1A, 2A und 3A. Am Druckausgang 4A wird ein vom Notbremsventilsystem 10 eingestellte Ausgangsdruck p_{Aus} bereitgestellt. Am Druckeingang 1A liegt ein geregelter Druck p_{ger} an, am Druckeingang 2A liegt ein statischer Druck pₛₜₐₜ an und am Druckeingang 3A liegt ein Hilfsdruck p_{hilf} an. Der Ausgangsdruck p_{Aus} wird von einem Magnetventil 11 und einem Kolbenventil 12 eingestellt, die sich im Inneren des Notbremsventilsystems befinden.

Im regulären Zustand wird das Magnetventil 11 bestromt, sodass es den Hilfsdruck p_{hilf} auf das Kolbenventil 12 leitet. Dort betätigt der Hilfsdruck p_{hilf} das Kolbenventil 12 derart, dass das Kolbenventil den statischen Druck pₛₜₐₜ isoliert und den geregelten Druck p_{ger} zum Druckausgang A4 leitet. Dadurch liegt im regulären Zustand am Druckausgang A4 der geregelte Druck p_{ger} an und stellt somit den Ausgangsdruck p_{Aus} dar.

Ist die Stromversorgung des Magnetventils 11 unterbrochen und eine Notbremsung ist damit erforderlich, ist der Hilfsdruck p_{hilf} vom Kolbenventil 12 isoliert. In diesem Zustand leitet das Kolbenventil 12 den statischen Druck pₛₜₐₜ an den Druckausgang 4A, sodass nun der statische Druck pₛₜₐₜ als Ausgangsdruck zur Verfügung steht. Somit liegt eine Notbremsung vor.

Wird das Magnetventil 11 bestromt und liegt gleichzeitig kein Hilfsdruck p_{hilf} am Druckeingang 3A an, so wird das Kolbenventil 12 ebenfalls nicht betätigt und der statische Druck pₛₜₐₜ wird als Ausgangsdruck p_{Aus} an den Druckausgang 4A bereitgestellt. Eine Notbremsung liegt daher auch in diesem Fall vor.

Die beschriebene Anordnung des Notbremsventils führt zur Bremslogik, die in **Figur 2** abgebildet ist. Ist eine Bestromung des Magnetventils gewährleistet und liegt ein Hilfsdruck p_{hilf} am Druckeingang 3A an, so wird der geregelte Druck p_{ger} als Ausgangsdruck p_{Aus} zur Verfügung gestellt. Fällt allerdings entweder die Bestromung des Magnetventils 11 aus oder liegt der Hilfsdruck p_{hilf} nicht am Druckeingang 3A an oder treten beide genannten Fälle ein, so wird der statische Druck pₛₜₐₜ als Ausgangsdruck p_{Aus} am Druckausgang 4A zur Verfügung gestellt und eine Notbremsung eingeleitet.

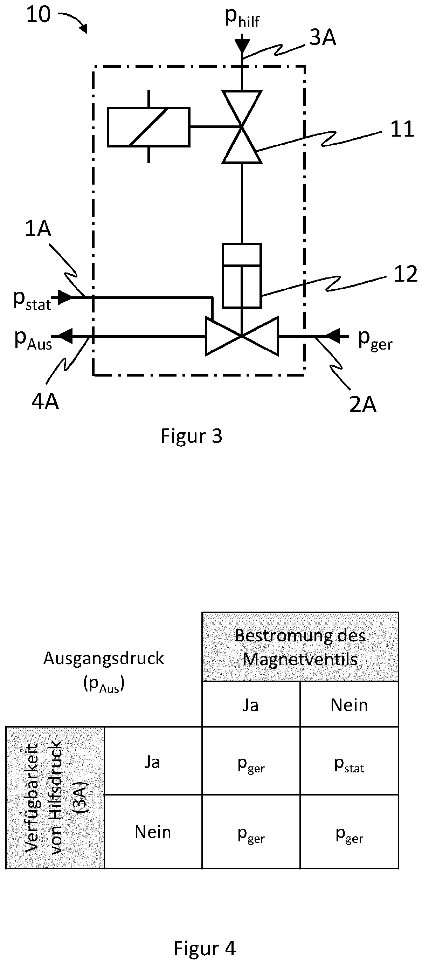

**Figur 3** stellt eine Ausführungsform eines erfindungsgemäßen Notbremsventilsystems 10 einer Bremssteuerung von einem Teil eines Zuges dar. Es sei darauf hingewiesen, dass sich in der vorliegenden Ausführungsform in einem Zug mehrere derartige Bremssteuerungen und damit Notbremsventilsysteme befinden. Auch das erfindungsgemäße Notbremsventilsystem weist einen Druckausgang 4A auf, an dem der Ausgangsdruck p_{Aus} bereitgestellt wird. Außerdem enthält auch das erfindungsgemäße Notbremsventilsystem ein Magnetventil 11 und ein Kolbenventil 12 ebenso wie drei Druckeingänge 1A, 2A und 3A. Allerdings sind die Eingänge im Vergleich zum Stand der Technik mit vertauschten Drücken beaufschlagt. Während am Druckeingang 3A weiterhin der Hilfsdruck p_{hilf} anliegt, liegt beim erfindungsgemäßen Notbremsventilsystem am Druckeingang 1A der statische Druck pₛₜₐₜ und am Druckeingang 2A der geregelte Druck p_{ger} an. Somit wurden im Vergleich zum Stand der Technik der statische Druck pₛₜₐₜ und der geregelte Druck p_{ger} an den jeweiligen Druckeingängen vertauscht.

Das Magnetventil 11 ist im erfindungsgemäßen Notbremsventilsystem derart konfiguriert, dass es im bestromten Fall den Hilfsdruck p_{hilf} vom Kolbenventil 12 isoliert. Somit wird das Kolbenventil 12 nicht betätigt und der geregelte Druck p_{ger} wird vom Druckeingang 2A zum Druckausgang 4A geleitet und als Ausgangsdruck p_{Aus} zur Verfügung stellt.

Wird das Magnetventil 11 nicht bestromt, dann wird der Hilfsdruck p_{hilf} auf das Kolbenventil 12 geleitet, wodurch der geregelte Druck p_{ger} isoliert wird und stattdessen der statische Druck pₛₜₐₜ an den Druckausgang 4A geleitet wird und als Ausgangsdruck p_{Aus} zur Verfügung gestellt wird.

Liegt kein Hilfsdruck p_{hilf} am Druckeingang 3A an, so wird das Kolbenventil 12 nicht betätigt und der geregelte Druck p_{ger} wird als Ausgangsdruck p_{Aus} zur Verfügung gestellt.

Die in Figur 3 dargestellte und oben beschriebene Anordnung führt zu der in **Figur 4** dargestellten Logik für den Ausgangsdruck p_{Aus}. Für den Fall, dass sowohl der Hilfsdruck p_{hilf} verfügbar ist als auch das Magnetventil 11 bestromt wird, also im regulären Betrieb, liegt ein geregelter Druck p_{ger} als Ausgangsdruck p_{Aus} vor.

Liegt kein Hilfsdruck p_{hilf} am Druckeingang 3A an, so stellt der geregelte Druck p_{ger} trotzdem den Ausgangsdruck p_{Aus} dar. Dazu ist zu erwähnen, dass der Wegfall des Hilfsdrucks lediglich lokal, also in einer von mehreren Bremssteuerungen des Zuges zum gleichen Zeitpunkt auftritt, da der Hilfsdruck nicht über eine zentrale Hauptluftleitung allen Bremssystemen zur Verfügung gestellt wird. In diesem Fall kann eine Bremsung des Zuges durch die Bremssysteme in den anderen Wagons sichergestellt werden, wodurch bei Ausfall des Hilfsdrucks keine Notbremsung eingeleitet werden muss.

Ist der Hilfsdruck p_{hilf} zwar verfügbar aber eine Bestromung des Magnetventils 11 nicht gewährleistet, so wird der statische Druck pₛₜₐₜ als Ausgangsdruck p_{Aus} bereitgestellt und eine Notbremsung wird eingeleitet.

Nach einer Notbremsung, bei der der statische Druck pₛₜₐₜ als Ausgangsdruck zur Verfügung stand, kann durch Wegnehmen (Abschalten) des Hilfsdrucks p_{hilf} erzielt werden, dass der statische Druck pₛₜₐₜ vom Druckausgang 4A isoliert wird und somit nicht länger am Bremszylinder anliegt, sondern durch den geregelten Druck p_{ger} ersetzt wird. Dieser steht dann als Ausgangsdruck p_{Aus} zur Verfügung. Auf diese Weise kann die Bremse nach einer Notbremsung unkompliziert gelöst werden und das Fahrzeug abgeschleppt werden, der Bremsdruck p_{br} aber über den geregelten Druck p_{ger}, sofern er vorliegt, weiter kontrolliert werden.

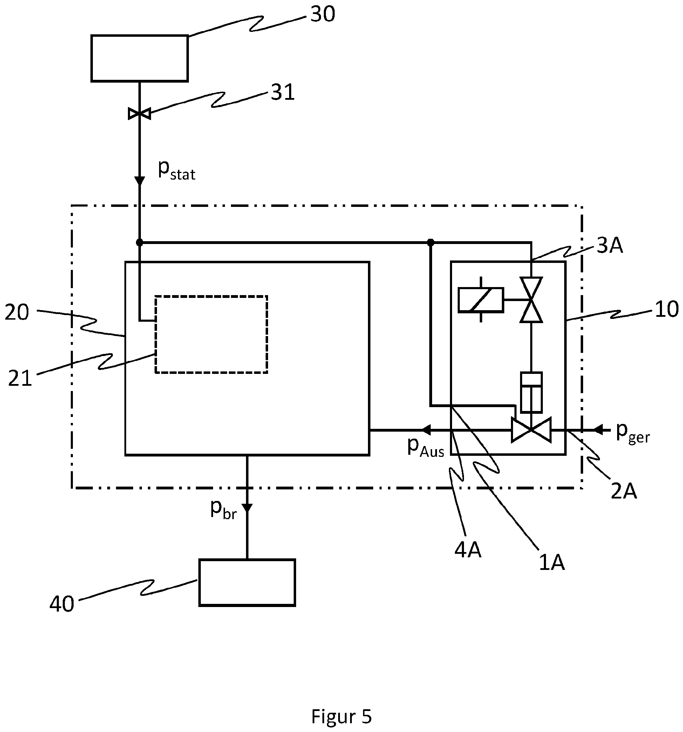

**Figur 5** zeigt einen Teil einer Systemarchitektur in die das Notbremsventilsystem 10 integriert ist. Der statische Druck pₛₜₐₜ wird durch einen Druckbehälter 30 zur Verfügung gestellt und an einen Druckregler 20 und über die Druckeingänge 1A und 3A an das Notbremsventilsystem 10 geleitet. Der Hilfsdruck p_{hilf} (in Fig. 3) ist also mit dem statischen Druck pₛₜₐₜ (Fig. 3) identisch. Im regulären Betrieb wird der geregelte Druck p_{ger} als Ausgangsdruck p_{Aus} zur Verfügung gestellt und an den Druckregler 20 weitergeleitet. Innerhalb des Druckreglers befindet sich ein Regelkreis 21, der den statischen Druck pₛₜₐₜ aus dem Druckbehälter 30 regelt. Im regulären Betrieb kann sowohl der durch den Regelkreis 21 geregelte Druck als auch der Ausgangsdruck p_{Aus} des Notbremsventils als Bremsdruck p_{br} an die Bremszylinder 40 (nicht dargestellt) weitergeleitet werden. Aus Sicherheitsgründen werden die beiden Drücke überlagert und der jeweils höhere Druck wird an die Bremszylinder 40 weitergeleitet. Weiterhin ist an dem Druckbehälter 30 ein Isolierhahn 31 vorgesehen, über den die Versorgung des Bremssystems mit statischem Druck pₛₜₐₜ unterbunden und der in den Leitungen zwischen Isolierhahn 31 und Druckregler 20 beziehungsweise Notbremsventil 10 befindliche Druck entlüftet werden kann.

Im Falle einer Notbremsung, wenn am Druckausgang 4A der statische Druck pₛₜₐₜ anliegt, wird dieser durch die Druckregler 20 als Bremsdruck p_{br} an die Bremszylinder 40 weitergeleitet. Nach dem Stillstand des Fahrzeugs soll jedoch der geregelte Druck p_{ger}, sofern dieser vorhanden ist, als Bremsdruck p_{br} an den Bremszylindern 40 anliegen, beispielsweise um das Fahrzeug abzuschleppen. In einem bevorzugten Fall wird dies erreicht, indem das Magnetventil nach der Notbremsung wieder bestromt wird, der am Kolbenventil 12 anliegende Hilfsdruck p_{hilf} über einen Pfad im Magnetventil 11 entlüftet wird und somit das Kolbenventil 12 den geregelten Druck p_{ger} wieder an den Druckausgang A4 leitet. Ist eine Bestromung des Magnetventils 11 nicht möglich, kann der geregelte Druck p_{ger} trotzdem an den Druckausgang 4A geleitet werden, indem der statische Druck pₛₜₐₜ in den Leitungen zwischen Isolierhahn 31 und Notbremsventil 10 durch den Isolierhahn 31 isoliert und entlüftet wird. Dadurch wird das Kolbenventil 12 betätigt und der geregelte Druck liegt als Ausgangsdruck p_{Aus} am Druckausgang 4A an. Somit kann ein einstellbarer Bremsdruck p_{br} vom Druckregler bereitgestellt werden, über den eine kontrollierte Bremsung, beispielsweise im Falle des Abschleppens nach einer Notbremsung, möglich ist. Dies wird durch die Entlüftung des statischen Drucks und die Isolierung des statischen Drucks vom Notbremsventil realisiert, sodass aufgrund des erfindungsgemäßen Notbremsventils der geregelte Druck als Bremsdruck wieder zur Verfügung steht.

### BEZUGSZEICHENLISTE

- 10: Notbremsventilsystem
- 11: erstes Ventil (Magnetventil)
- 12: zweites Ventil (Kolbenventil)
- 20: Druckregler
- 21: Regelkreis
- 30: Druckbehälter
- 31: Isolierhahn
- 40: Bremszylinder
- 1A: erster Druckeingang
- 2A: zweiter Druckeingang
- 3A: dritter Druckeingang
- 4A: Druckausgang
- p_{ger}: geregelter Druck
- pₛₜₐₜ: statischer Druck
- p_{hilf}: Hilfsdruck
- p_{Aus}: Ausgangsdruck
- p_{br}: Bremsdruck

## Patentansprüche

1. Notbremsventilsystem (10) für ein pneumatisches Bremssystem aufweisend,
ein erstes Ventil (11) und ein zweites Ventil (12), wobei das erste Ventil (11) dazu konfiguriert ist, einen Hilfsdruck (p_{hilf}) an das zweite Ventil (12) zu leiten oder davon zu isolieren,
und das zweite Ventil (12) dazu konfiguriert ist, in Abhängigkeit von dem Hilfsdruck (p_{hilf}) entweder einen statischen (pₛₜₐₜ) oder einen geregelten Druck (p_{ger}) bereitzustellen,
**dadurch gekennzeichnet, dass**
das erste Ventil (11) dazu konfiguriert ist, im regulären Betrieb den Hilfsdruck (p_{hilf}) vom zweiten Ventil (12) zu isolieren, so dass dadurch das zweite Ventil (12) den geregelten Druck (p_{ger}) bereitstellt, und weiter dazu konfiguriert ist, im Notbetrieb den Hilfsdruck (p_{hilf}) an das zweite Ventil (12) zu leiten, so dass dadurch das zweite Ventil (12) den statischen Druck (pₛₜₐₜ) bereitstellt.

2. Notbremsventilsystem (10) gemäß dem vorherigen Anspruch, wobei der vom zweiten Ventil (12) bereitgestellte Druck der Ausgangsdruck (p_{Aus}) des Notbremsventilsystems (10) ist.

3. Notbremsventilsystem (10) gemäß dem vorherigen Anspruch, wobei der Ausgangsdruck (p_{Aus}) des Notbremsventilsystems (10) der Bremsdruck (p_{br}) des pneumatischen Bremssystems ist.

4. Notbremsventilsystem (10) gemäß einem der vorherigen Ansprüche, wobei der erste Druckeingang (1A) und/oder der zweite Druckeingang (2A) am zweiten Ventil (12) vorgesehen sind.

5. Notbremsventilsystem (10) gemäß einem der vorherigen Ansprüche, wobei der dritte Druckeingang (3A) am ersten Ventil (11) vorgesehen ist.

6. Notbremsventilsystem (10) gemäß einem der vorherigen Ansprüche, wobei der Druckausgang (4A) am zweiten Ventil (12) vorgesehen ist.

7. Notbremsventilsystem (10) gemäß einem der vorherigen Ansprüche, wobei das erste Ventil (11) ein Magnetventil ist.

8. Notbremsventilsystem (10) gemäß dem vorherigen Anspruch, wobei das Magnetventil (11) dazu konfiguriert ist im regulären Betrieb bestromt zu sein und dabei den am Druckeingang (3A) anliegenden Druck auf das zweite Ventil (12) zu leiten.

9. Notbremsventilsystem (10) gemäß den beiden vorherigen Ansprüchen, wobei das Magnetventil (11) dazu konfiguriert ist im Notbetrieb unbestromt zu sein und dabei den am Druckeingang (3A) anliegenden Druck vom zweiten Ventil (12) zu isolieren.

10. Notbremsventilsystem (10) gemäß einem der vorherigen Ansprüche, wobei das zweite Ventil (12) ein Kolbenventil ist.

11. Notbremsventilsystem (10) gemäß einem der vorherigen Ansprüche, wobei das erste Ventil (11) dazu konfiguriert ist, den im Notbetrieb am zweiten Ventil (12) anstehenden Hilfsdruck (p_{hilf}) beim Übergang in den regulären Betrieb zu entlüften.

## Claims

1. An emergency brake valve system (10) for a pneumatic brake system, comprising:
a first valve (11) and a second valve (12),
the first valve (11) being configured so as to convey an auxiliary pressure (p_{hilf}) to or isolate an auxiliary pressure (p_{hilf}) from the second valve (12);
and the second valve (12) being configured so as to provide either a static pressure (pₛₜₐₜ) or a regulated pressure (p_{ger}) dependent on the auxiliary pressure (p_{hilf}),
**characterised in that**
the first valve (11) is configured such that in normal operation it isolates the auxiliary pressure (p_{hilf}) from the second valve (12) so that the second valve (12) provides the regulated pressure (p_{ger}), and is further configured such that in emergency operation it conveys the auxiliary pressure (p_{hilf}) to the second valve (12) so that the second valve (12) provides the static pressure (pₛₜₐₜ).

2. An emergency brake valve system (10) according to the preceding claim,
the pressure provided by the second valve (12) being the output pressure (p_{Aus}) of the emergency brake valve system (10).

3. An emergency brake valve system (10) according to the preceding claim,
the output pressure (p_{Aus}) of the emergency brake valve system (10) being the brake pressure (p_{br}) of the pneumatic brake system.

4. An emergency brake valve system (10) according to any one of the preceding claims,
the first pressure input (1A) and/or the second pressure input (2A) being provided at the second valve (12).

5. An emergency brake valve system (10) according to any one of the preceding claims,
the third pressure input (3A) being provided at the first valve (11).

6. An emergency brake valve system (10) according to any one of the preceding claims,
the pressure output (4A) being provided at the second valve (12).

7. An emergency brake valve system (10) according to any one of the preceding claims,
the first valve (11) being a solenoid valve.

8. An emergency brake valve system (10) according to any one of the preceding claims,
the solenoid valve (11) being configured so as to be energised in normal operation and so to convey the pressure prevailing at the pressure input (3A) to the second valve (12).

9. An emergency brake valve system (10) according to the two preceding claims,
the solenoid valve (11) being configured so as to be de-energised in emergency operation and so to isolate the pressure prevailing at pressure input (3A) from the second valve (12).

10. An emergency brake valve system (10) according to any one of the preceding claims,
the second valve (12) being a piston valve.

11. An emergency brake valve system (10) according to any one of the preceding claims,
the first valve (11) being configured so as to vent the auxiliary pressure (p_{hilf}) prevailing at the second valve (12) in emergency operation on transition to normal operation.

## Revendications

1. Système (10) de valve de frein d'urgence pour un système pneumatique de frein comportant
une première valve (11) et une deuxième valve (12), dans lequel la première valve (11) est configurée pour appliquer une pression (p_{hilf}) auxiliaire à la deuxième valve (12) ou l'en isoler,
et la deuxième valve (12) est configurée pour mettre à disposition, en fonction de la pression (p_{hilf}) auxiliaire, soit une pression (pₛₜₐₜ) statique, soit une pression (p_{ger}) régulée,
**caractérisé en ce que** la première valve (11) est configurée pour, en fonctionnent régulier, isoler la pression (p_{hilf}) auxiliaire de la deuxième valve (12), de manière à ce qu'ainsi la deuxième valve (12) mette à disposition la pression (p_{ger}) régulée et est configurée en outre de manière à appliquer, en fonctionnement d'urgence, la pression (p_{hilf}) auxiliaire à la deuxième valve (12), de manière à ce qu'ainsi la deuxième valve (12) mette à disposition la pression (pₛₜₐₜ) statique.

2. Système (10) de valve de frein d'urgence suivant la revendication précédente, dans lequel la pression mise à disposition par la deuxième valve (12) est la pression (p_{Aus}) de sortie du système (10) de valve de frein d'urgence.

3. Système (10) de valve de frein d'urgence suivant la revendication précédente, dans lequel la pression (p_{Aus}) de sortie du système (10) de valve de frein d'urgence est la pression (p_{br}) de frein du système pneumatique de frein.

4. Système (10) de valve de frein d'urgence suivant l'une des revendications précédentes, dans lequel la première entrée (1A) de pression et/ou la deuxième entrée (2A) de pression sont prévues sur la deuxième valve (12).

5. Système (10) de valve de frein d'urgence suivant l'une des revendications précédentes, dans lequel la troisième entrée (3A) de pression est prévue sur la première valve (11).

6. Système (10) de valve de frein d'urgence suivant l'une des revendications précédentes, dans lequel la sortie (4A) de pression est prévue sur la deuxième valve (12).

7. Système (10) de valve de frein d'urgence suivant l'une des revendications précédentes, dans lequel la première valve (11) est une électrovanne.

8. Système (10) de valve de frein d'urgence suivant la revendication précédente, dans lequel l'électrovanne (11) est configurée pour être alimentée en courant en fonctionnement régulier et ainsi appliquer à la deuxième valve (12) la pression régnant à l'entrée (3A) de pression.

9. Système (10) de valve de frein d'urgence suivant les deux revendications précédentes, dans lequel l'électrovanne (11) est configurée pour ne pas être alimentée en courant en fonctionnement d'urgence et ainsi isoler la pression régnant à l'entrée (3A) de pression de la deuxième valve (12).

10. Système (10) de valve de frein d'urgence suivant l'une des revendications précédentes, dans lequel la deuxième valve (12) est une valve à piston.

11. Système (10) de valve de frein d'urgence suivant l'une des revendications précédentes, dans lequel la première valve (11) est configurée pour purger, lors du passage dans le fonctionnement régulier, la pression (p_{hilf}) auxiliaire régnant en fonctionnement d'urgence à la deuxième valve (12).
